# EUROPÄISCHE PATENTSCHRIFT

(11) **EP 0 333 973 B1**
(45) Veröffentlichungstag und Bekanntmachung des Hinweises auf die Patenterteilung: **24.04.1996**
(21) Anmeldenummer: 89100030.9
(22) Anmeldetag: 03.01.1989
(51) Int. Cl.: B29C 65/02, B29C 65/74, B65D 30/02

(54) **Verfahren zum Verschweissen von flächig aufeinanderliegenden Kunststoffolien**
Method for welding flat plastic sheets one over the other
Procédé pour souder des feuilles planes en matière plastique l'une sur l'autre

(30) Priorität: 23.03.1988 DE 3809698
(43) Veröffentlichungstag der Anmeldung: 27.09.1989
(73) Patentinhaber: ALKOR GMBH KUNSTSTOFFE, D-81451 München (DE)
(72) Erfinder: Fleischmann, Edgar, Dipl.-Ing., D-8000 München 82 (DE); Mayr, Maximilian, Dipl.-Ing., D-8268 Garching/Alz (DE); Heitz, Heinrich, Dr, Dipl.-Ing., D-8034 Germering (DE)
(74) Vertreter: Seiler, Siegfried

(56) Entgegenhaltungen:
- BE-A- 543 200
- DE-A- 3 703 394
- DE-U- 8 634 962
- DE-U- 8 705 710
- FR-A- 2 389 486
- FR-E- 36 927
- GB-A- 1 243 123
- US-A- 2 349 336
- US-A- 2 361 288
- US-A- 2 638 963
- US-A- 3 593 000
- US-A- 4 256 784
- DATABASE WPIL Derwent Publications Ltd., London, GB; AN 81-14540D[09]
- PATENT ABSTRACTS OF JAPAN vol. 9, no. 209 (M-407)(1932) 27. August 1985

## Beschreibung

Die vorliegende Erfindung betrifft ein Verfahren zum Verschweißen von flächig aufeinanderliegenden Kunststoffolien (einschließlich Kunststoffolienbahnen und/oder -zuschnitten), wobei die flächig aufeinanderliegenden Kunststoffolien mit einer beheizten Kontaktfläche oder Kontaktlinie und/oder Schneidkante in Berührung gebracht oder dagegen gedrückt werden, wobei als flächig aufeinanderliegende Kunstoffolien solche eingesetzt werden, die Olefinhomo-, -co-, -terpolymerisate und/oder Polyolefinlegierungen vorzugsweise zu mehr als 50 Gew.-% enthalten und eine Shore-D-Härte von 25 - 68, vorzugsweise 33 - 63, aufweisen und die flächig aufeinanderliegenden Kunstoffolien trennahtverschweißt werden, wobei durch eine bestimmte Zusammensetzung und den Aufbau der Kunststoffolie Vorteile erzielt werden. Die Erfindung betrifft weiterhin daraus hergestellte trennahtverschweißte Kunststoffbeutel, -taschen oder -hüllen und eine Vorrichtung zur Herstellung derselben.

Das Verschweißen von Kunststoffolien, die vor dem Verschweißen in flächige Anlage gebracht werden, ist bereits bekannt. Bestimmte Kunststoffolien, z. B. solche aus oder unter Mitverwendung von Polyolefinen (Polypropylen, Polyethylen und dgl.) sowie anderen Kunststoffen sind jedoch problematisch, da bei oder nach dem Schweißvorgang Störungen, z. B. Verwellungen des Materials neben den Scheißnähten, Verwerfungen, Schrumpfungen, Fehlerstellen und dgl. auftreten.

Es sind daher bereits Verfahren bekannt, bei denen die Polymerfolien vor dem Verschweißvorgang einer Vorbehandlung, z. B. einer Temperung (vgl. DE-PS 2 630 817) unterworfen werden.

Es sind weiterhin Geräte zum Heißsiegeln von dünnen Lagern aus thermoplastischen Kunststoffen, insbesondere Folienschläuchen bekannt, bei denen ein mit einer Trennleiste versehenes Heiz- oder Schweißband gegen eine elastische zusammendrückbare Auflage geführt und unter Druck verschweißt wird.

Nachteilig ist jedoch bei diesem Verfahren und bei dieser Vorrichtung, daß bei bestimmten Kunststofffolienbahnen, je nach Art des Kunststoffes, Schwierigkeiten bei dem Verschweißen oder bei dem Schweißgut auftreten, insbesondere unsichere Schweißnähte entstehen, nur eine geradlinige Verschweißung möglich ist oder keine L-, bogen-, oder U-förmigen und dgl. Trennähte zu erzielen sind. Weiterhin ist bekannt, daß die Trennähte nach dem Trennahtverschweißen leicht aufgerissen und beschädigt werden können.

Ziel und Aufgabe der vorliegenden Erfindung war es, diese Nachteile zu vermeiden und ein Verfahren sowie Kunststoffbeutel, -taschen oder -hüllen sowie eine Vorrichtung zu finden, das bzw. die vorteilhafter ist bzw. sind. So sollten sichere Trennähte erzielt werden können, die mechanisch belastbar sind. Die Kunststoffbeutel und dgl. sollten leicht bzw. unter Anwendung eines verbesserten Verfahrens herstellbar und mechanisch hoch belastbar sein. Die Form der Schweißnähte sollte auch mit Hilfe des Verfahrens und der Vorrichtung von der geradlinigen Schweißnahtform abweichen können und insbesondere L-, bogen-, U-förmige, mehreckige Trennähte erzielen lassen. Die Schweißnaht sollte ästhetisch wirkende Profilierungen gemäß der Erfindung aufweisen. Die Vorrichtung sollte neben diesen Vorteilen auch leicht bedienbar sein und/oder regulierbar hinsichtlich der zu verwendenden Schweißform sein.

Erfindungsgemäß wurde festgestellt, daß diesen Zielen und Aufgaben ein Verfahren zum Verschweißen von flächig aufeinanderliegenden Kunststoffolien (einschließlich Kunststoffolienbahnen und/oder -zuschnitten), gerecht wird, wobei zum Verschweißen zwei- oder mehrschichtige Verbundfolien unterschiedlicher chemischer Zusammensetzung verwendet werden, von denen die eine Verbundfolie eine opake gefärbte oder ungefärbte Schicht oder Folie aufweist, die 50 - 80 Gewichtsteile Polypropylen, 5 - 15 Gewichtsteile EPDM und/oder EPM, 0,5 - 10 Gewichtsteile Füllstoff oder Füllstoffgemisch, 11 - 15 Gewichtsteile Ethylen-Vinylacetat-Copolymerisat, 10 - 30 Gewichtsteile Polyethylen oder Ethylen-Copolymerisat und 0 - 3,5 Gewichtsteile, vorzugsweise 0,1 - 1,5, Gewichtsteile, eines Verarbeitungshilfs- oder Zusatzmittels sowie 0 - 8 Gewichtsteile mindestens eines Farbstoffes und/oder Farbpigmentes enthält oder daraus besteht. Auf dieser opaken Schicht oder Folie ist unmittelbar oder über eine Zwischenschicht eine transparente Siegelschicht auf der Basis eines Propylen-Ethylen-Copolymerisates oder einer Propylen-Ethylen-Legierung angeordnet. Mit dieser Verbundfolie wird eine andere, aus mindestens zwei Schichten bestehende transparente Verbundfolie so verschweißt, daß die Siegelschicht der opaken Verbundfolie unmittelbar auf einer Siegelschicht der transparenten Verbundfolie aufliegt. Die Siegelschicht der transparenten Verbundfolie enthält ein Propylen-Ethylen-Copolymerisat oder eine Propylen-Ethylen-Legierung oder besteht daraus und ist unmittelbar oder unter Zwischenschaltung einer transparenten Zwischenschicht oder Zwischenfolie mit einer transparenten Oberschicht auf der Basis von Polypropylen verbunden.

Nach einer bevorzugten Ausführungsform des erfindungsgemäßen Verfahrens enthält die opake, gefärbte oder ungefärbte Schicht oder Folie 55 - 70 Gewichtsteile Polypropylen, 5,5 - 10 Gewichtsteile EPDM, 1 - 5 Gewichtsteile Füllstoff, 3 - 10 Gewichtsteile Ethylen-Vinylacetat-Copolymerisat, 15 - 25 Gewichtsteile Polyethylen und 0,1 - 1,5 Gewichtsteile eines Verarbeitungshilfsmittels sowie 0,1 - 5 Gewichtsteile mindestens eines Farbstoffes oder Farbpigmentes oder besteht daraus.

Nach einer weiteren bevorzugten Ausführungsform enthält die transparente Oberschicht oder Oberfächenschicht auf der Basis von Polypropylen je 100 Gewichtsteile Propylenhomopolymerisat 0 - 2,5 Gewichtsteile, vorzugsweise 0,1 - 1,5 Gewichtsteile eines Verarbeitungshilfsmittels oder besteht daraus.

Die Siegelschichten enthält je 100 Gewichtsteile Propylen-Ethylen-Copolymerisat 1 - 15 Gewichtsteile, vorzugsweise 3 - 10 Gewichtsteile, Polyethylen oder Ethylen-Einheiten oder besteht daraus.

Bei dem Verschweißen im Rahmen des erfindungsgemäßen Verfahrens unter Verwendung dieser erfindungsgemäßen Verbundfolien werden u. a. folgende Vorteile erzielt: hohe Schweißnahtfestigkeiten, einfache Verarbeitung beim Verschweißen, wobei optisch ansprechende Artikel hergestellt werden können.

Die opake Verbundfolie ist bevorzugt eine zweischichtige Verbundfolie, die aus einer 50 bis 400 µm, vorzugsweise 100 - 300 µm, dicken opaken Schicht oder Folie und einer 20 - 60 µm, vorzugsweise 25 - 50 µm, dicken Siegelschicht besteht.

Die transparente Verbundfolie ist bevorzugt eine zweischichtige Verbundfolie, die aus einer 20 -60 µm, vorzugsweise 25 - 50 µm, dicken Siegelschicht und einer 50 - 250 µm, vorzugsweise 80 - 160 µm, dicken transparenten Oberflächenschicht besteht.

Bei dem erfindungsgemäßen Verfahren wird die Schweißtemperatur in Abhängigkeit von der Foliendicke, Schweißzeit, Druck, der Folienzusammensetzung und eventuellen Vorrichtungsteilen, insbesondere Temperaturtrennbänder, Transportbänder, Arbeitsplatten oder Vorschubvorrichtung im Temperaturbereich 100 - 190 °C, vorzugsweise 140 - 170 °C, (berechnet als mittlere Schweißtemperatur) eingestellt.

Der mittlere Temperaturbereich der Schweißtemperatur beträgt im Rahmen des erfindungsgemäßen Verfahrens bei dem Oberwerkzeug 100 - 150 °C, vorzugsweise 120 - 145 °C, bei dem Unterwerkzeug 140 - 190 °C, vorzugsweise 150 - 175 °C.

Die Erfindung betrifft weiterhin trennahtverschweißte Kunststoffbeutel, -taschen oder -hüllen, die aus mindestens zwei miteinander trennahtverschweißten Kunststoffolienabschnitten oder -zuschnitten auf der Basis von Olefinhomo-, -co-, -terpolymerisaten und/oder Polyolefinlegierungen bestehen, die vorzugsweise zu mehr als 50 Gew.-% Polyolefin enthalten und eine Shore-D-Härte von 25 - 68, vorzugsweise 33 - 63, aufweisen und die Kunststoffolienbahnabschnitte oder -zuschnitte an oder in der Nähe ihrer Ränder miteinander trennahtverschweißt sind. Die zwei- oder mehrschichtigen Kunststoffbeutel, -taschen oder -hüllen weisen gemäß der Erfindung unterschiedliche chemische Zusammensetzungen auf, von denen der eine Verbundfolienbahnabschnitt oder -zuschnitt eine opake gefärbte oder ungefärbte Schicht oder Folie aufweist, die 50 - 80 Gewichtsteile Polypropylen, 5 - 15 Gewichtsteile EPDM und/oder EPM, 0,5 - 10 Gew.Teile Füllstoff oder Füllstoffgemisch, 11 - 15 Gewichtsteile Ethylen-Vinylacetat-Copolymerisat, 10 - 30 Gewichtsteile Polyethylen oder Ethylen-Copolymerisat und 0 - 3,5 Gewichtsteile, vorzugsweise 0,1 - 1,5 Gewichtsteile eines Verarbeitungshilfs- oder -zusatzmittels sowie 0 - 8 Gewichtsteile mindestens eines Farbstoffes und/oder Farbpigmentes enthält oder daraus besteht. Auf diesem opaken Verbundfolienabschnitt oder -zuschnitt ist unmittelbar oder über eine Zwischenschicht eine transparente Siegelschicht auf der Basis eines Propylen-Ethylen-Copolymerisates oder einer Propylen-Ethylen-Legierung angeordnet. Mit diesem Verbundfolienbahnabschnitt oder -zuschnitt ist ein anderer, aus mindestens zwei Schichten bestehender transparenter Verbundfolienbahnabschnitt oder -zuschnitt über eine Trennnahtverschweißung oder eine Schweißnaht so verbunden, daß die Siegelschicht des opaken Verbundfolienbahnabschnittes oder -zuschnittes unmittelbar auf einer Siegelschicht des transparenten Verbundfolienbahnabschnittes oder -zuschnittes aufliegt. Die Siegelschicht des transparenten Verbundfolienbahnabschnittes oder -zuschnittes enthält ein Propylen-Ethylen-Copolymerisat oder eine Propylen-Ethylen-Legierung oder besteht daraus und ist unmittelbar oder unter Zwischenschaltung einer transparenten Zwischenschicht oder Zwischenfolie mit einer transparenten Oberschicht auf der Basis von Polypropylen verbunden.

Bei den erfindungsgemäßen trennahtverschweißten Kunststoffbeuteln, -taschen oder -hüllen enthält somit die opake, gefärbte oder ungefärbte Schicht oder Folie des einen Verbundfolienabschnittes oder -zuschnittes 55 - 70 Gewichtsteile Polypropylen, 5,5 - 10 Gewichtsteile EPDM, 1 - 5 Gewichtsteile Füllstoff, 3 - 10 Gewichtsteile Ethylen-Vinylacetat-Copolymerisat, 15 - 25 Gewichtsteile Polyethylen und 0,1 bis 1,5 Gewichtsteile eines Verarbeitungshilfsmittels oder besteht daraus.

Die transparente Oberschicht oder Oberflächenschicht des anderen Verbundfolienbahnabschnittes oder -zuschnittes auf der Basis von Polypropylen enthält dabei je 100 Gewichtsteile Propylenhomopolymerisat 0 - 2,5 Gewichtsteile, vorzugsweise 0,1 - 1,5 Gewichtsteile, eines Verarbeitungshilfsmittels oder besteht daraus.

Die Siegelschichten der trennnahtverschweißten Kunststoffbeutel, -taschen oder -hüllen enthalten je 100 Gewichtsteile Propylen-Ethylen-Copolymerisat 1 - 15 Gewichtsteile, vorzugsweise 3 - 10 Gewichtsteile Polyethylen- oder Ethylen-Einheiten oder bestehen daraus.

Der opake Verbundfolienbahnabschnitt oder -zuschnitt der trennahtverschweißten Kunststoffbeutel, -taschen oder -hüllen ist bevorzugt zweischichtig und besteht aus einer 50 - 400 µm, vorzugsweise 100 - 300 µm, dicken opaken Schicht oder einem Folienbahnabschnitt und einer 20 - 60 µm, vorzugsweise 25 - 50 µm, dicken Siegelschicht.

Der andere transparente Verbundfolienbahnabschnitt oder -zuschnitt der trennahtverschweißten Kunststoffbeutel, -taschen oder hüllen ist bevorzugt zweischichtig und besteht aus einer 20 - 60 µm, vorzugsweie 25 - 50 µm, dicken Siegelschicht und einer 50 - 250 µm, vorzugsweise 80 - 160 µm, dicken transparenten Oberflächenschicht.

Gemäß der Erfindung ist das feststehende oder festeingespannte Trennband, Trenngitter, Trenngewebe oder Trenngewirke an einer Walze abwickelbar angeordnet, so daß bei Abnutzung des Trennbandes eine Abwicklung bzw. Weiterführung der beaufschlagten bzw. abgenutzten Stelle erfolgt, wobei das Trennband nicht als Transportband dient oder sogar in Gegenrichtung geführt werden kann. Eine optimalere Ausnutzung oder Abnutzung des Trennbandes, Trenngitters, Trenngewebes oder Gemisches ist dadurch gegeben. Eine Abwickelvorrichtung für das abgenutzte Trennband, Trenngitter, Trenngewebe oder Trenngewirke ist vorzugsweise an der Vorrichtung angeordnet.

Walzen, Zylinder oder ähnliche Vorrichtungen und/oder die Auf- und/oder Abwickelvorrichtung sind dabei als Spann- und/oder Festhaltevorrichtung für das zwischen Elektrode und Gegenelektrode gespannte feststehende Trennband, Trenngitter, Trenngewebe oder Trenngewirke angeordnet.

Nach einer bevorzugten Ausführungsform der Vorrichtung ist mindestens eine Nut oder Rille (gemessen oder berechnet bei geschlossenem Werkzeug) in lotrechter Richtung gegenüber der Schneidkante und/oder der Schweißpresse angeordnet. Bei dieser Ausführungsform kann u. a. die Abnutzung der Schneidkante vermindert werden.

Die in der Gegenelektrode oder im Gegenwerkzeug angeordnete Nuten oder Rillen oder Vertiefungen weisen einen Abstand (gemessen von der Oberfläche der Gegenelektrode oder des Gegenwerkzeuges bis zur Nut- oder Rillentiefe als senkrechter Abstand von der Oberfläche) von 0,1 bis 30 µm, vorzugsweise 0,5 bis 15 µm, auf.

Nach einer anderen Ausführungsform ist mindestens eine Nut oder Rille in der Gegenelektrode oder im Gegenwerkzeug in lotrechter Richtung (berechnet bei geschlossenem Werkzeug) gegenüber dem zurückspringend angeodneten Schweißprofil angeordnet.

Die Form der Schweißelektrode der Schweißpresse wird nach einer bevorzugten Ausführungsform des erfindungsgemäßen Verfahren in Abhängigkeit von der Gesamtdicke der flächig aufeinanderliegenden Kunststoffolien, -bahnen und/oder -zuschnitte so ausgewählt, daß der senkrechte Abstand ( h) des Schweißprofiles der Schweißelektrode von der spitzen oder messerähnlichen Schneidkante 75 - 35 %, vorzugsweise 65 - 40 %, der Gesamtdicke der flächig aufeinanderliegenden zu verschweißenden Kunststoffolien, -bahnen und/oder -zuschnitte beträgt. Weiterhin erfolgt eine zusätzliche Beheizung von der, der Schweißelektrode gegenüberliegenden Fläche her oder durch die beheizte Gegenplatte oder Gegenelektrode.

Die Schließ- und/oder Hubbewegung der Schweißpresse, vorzugsweise der mit einer spitzen oder messerähnlichen Schneidkante und einem zurückspringend angeordneten Schweißprofil versehenen, auf der Platte angeordneten Schweißelektrode erfolgt nach einer vorzugsweisen Ausführungsform durch Computersteuerung und/oder elektronische Steuerung. Die spitze oder messerähnliche Schneidkante wird dabei vertikal oder nahezu vertikal zu den Kunststoffolien, -bahnen und/oder -zuschnitten beim Trennahtverschweißen geführt.

Die Schweißpresse besteht somit nach einer bevorzugten Ausführungsform aus einer beheizten Hubplatte (Oberheizung) und einer beheizten Gegenelektrode oder beheizten Tischplatte (Unterheizung) zur Aufnahme des Ober- und Unterwerkzeugs. Die Schweißpresse ist durch einen computergesteuerten Linearverstärker in der Lage, auf hundertstel Millimeter genau zu arbeiten. Durch dieses hohe Maß an Präzision kann man die Einsinktiefe des Oberwerkzeuges exakt einstellen und ein Beschädigen des Transportbandes vermeiden.

Durch die Computersteuerung und/oder elektronische Steuerung und die Wahl der Schweißelektrode (mit Schneidkante und Schweißprofil) werden materialverdünnte Stellen oder Linien (Sollbruchstellen) bei der Wärmekontakttrennahtverschweißung mit einer gleichmäßigen Materialdicke erhalten, deren Standardabweichung oder Toleranz (gemessen über den gesamten Bereich der Trennahtverschweißung) in der Sollbruchstelle weniger als 25 %, vorzugsweise weniger als 10 %, beträgt.

Die erfindungsgemäße Vorrichtung erlaubt auch das Trennahtverschweißen u. a. von Polyolefinfolien sowie die Einhaltung hoher Taktzahlen bzw. höherer Maschinengeschwindigkeiten und somit eine vergrößerte Produktionsleistung.

Nach einer bevorzugten Ausführungsvorm wird eine Kunststoffolie oder -bahn von einer Rolle oder einem Stapel her der Wärmekontaktschweißpresse zugeführt. Vor der Wärmekontaktschweißpresse werden vorzugsweise die zu verschweißenden Kunststoffolienzuschnitte auf oder an der Kunststoffolie oder -bahn lose befestigt oder angeheftet.

Nach einer vorteilhaften Ausführungsform werden die Kunststoffolien oder -bahnen mit den trennaht- und/oder wärmekontaktverschweißten Artikeln oder Zuschnitten, die über die Sollbruchstellen mit dem Abfallgitter in Verbindung stehen, durch ein Messer oder eine ähnliche Trennvorrichtung in einzelne Folienabschnitte von einer Länge von 100 - 1000 mm, vorzugsweise 200 - 700 mm und eine Breite von 200 - 2000 mm, vorzugsweise 500 - 1200 mm geschnitten bzw. getrennt und erst nachfolgend die verschweißten Kunststoffartikel vom Abfallgitter getrennt.

Unmittelbar nach der Wärmekontakttrennahtverschweißung werden nach der Weiterbewegung oder dem Weitertransport die verschweißten Kunststoffolien, -bahnen und/oder -zuschnitte einer Kontakt- und/oder Preßkühlung unterworfen.

Die flächig aufeinanderliegenden Kunststoffolien, -bahnen und/oder -zuschnitte werden während der Wärmekontakttrennahtverschweißung durch das Schweißprofil und die federnd angeordnete Andrückplatte zusammengedrückt, aneinandergedrückt und/oder festgehalten, so daß eine Rutsch- oder Gleitbewegung des Kunststoffmaterials zum Zeitpunkt der Wärmekontakttrennahtverschweißung verhindert wird.

Die innerhalb des Verfahrens verwendete spitze oder messerähnliche Schneidkante weist im Querschnitt annähernd eine Parabelform, vorzugsweise eine symmetrische Parabelform oder parabelähnliche Form auf, die im unteren Abschnitt einen annähernd durch den Wendepunkt der Parabel oder der parabelähnlichen Form gehenden kreisähnlichen Bogen mit einem mittleren Radius von 0,05 bis 0,12 mm, vorzugsweise 0,06 bis 0,10 mm, besitzt, dessen Kreismittelpunkt vorzugsweise in der, durch den Wendepunkt der Parabel gehenden Achse liegt.

Nach einer Ausführungsform wird innerhalb des erfindungsgemäßen Verfahrens zwischen der Schweißpresse ein Band oder Transportband aus nicht oder schlecht wärmeleitendem Material, vorzugsweise ein feststehendes Trennband, Trenngitter, Trenngewebe oder Trenngewirke angeordnet oder der Transport erfolgt mit oder ohne Band oder Transportband mittels Zangenvorschub. Die Gegenelektrode oder das Gegenwerkzeug weisen einerseits Profilierungen, vorzugsweise Nuten, Rillen und/oder vorspringende Kanten oder Erhebungen, und die Elektrode andererseits die Schneidkante und/oder das Schweißprofil auf.

Nach einer bevorzugten Ausführungsform ist die Schneidkante in der Aufsicht der Form und der Abmessung des trennahtzuverschweißenden Teiles oder Gegenstandes angepaßt und weist an einer oder mehreren Stellen eine Verlängerung zum Format- oder Zuschnittrand auf.

Nach einer weiteren Ausführungsform des Verfahrens weist der im Querschnitt kreisähnliche Bogen der im Querschnitt parabelähnliche Form der Schneidkante einen im Querschnitt dreieckähnlichen Schneidvorsprung auf, dessen Spitze in einem senkrechten Abstand vom Kreisbogen liegt, der kleiner als 0,06 mm, vorzugsweise kleiner als 0,05 mm, ist.

### Beispiele

1. Rezeptur für die opakte gefärbte oder unbefärbte Schicht oder Folie:
   - 69 Gew.-Teile: Polypropylen
   - 8 Gew.-Teile: Ethylen-Propylen-Dien-Terpolymerisat (EPDM)
   - 1 Gew.-Teil: Ethylen-Propylen-Copolymerisat (EPM)
   - 9 Gew.-Teile: Ethylen-Vinylacetat-Copolymerisat
   - 5 Gew.-Teile: Füllstoffgemisch (bestehend aus Calciumcarbonat und Talkum)
   - 3 Gew.-Teile: eines Farbstoffes und/oder Farbpigmentgemisches
2. Opakte Folienschicht oder Folie
   - 66 Gew.-Teile: Polypropylen
   - 9 Gew.-Teile: Ethylen-Propylen-Dien-Terpolymerisat (EPDM)
   - 8 Gew.-Teile: Ethylen-Vinylacetat-Copolymerisat
   - 4,5 Gew.-Teile: Füllstoffgemisch (bestehend aus Calciumcarbonat)
   - 3,5 Gew.-Teile: eines Farbstoffes und/oder Farbpigmentgemisches
3. Zusammensetzung der Siegelschicht
   - 100 Gew.-Teile: Propylen-Ethylen-Copolymerisat, davon
   - 6 Gew.-Teile: Polyethylen bzw. Ethylen-Einheiten
4. Zusammensetzung der Siegelschicht bestehend aus
   - 100 Gew.-Teilen: Propylen-Ethylen-Copolymerisat mit
   - 8 Gew.-Teilen: Polyethylen-Einheiten oder Ethylen-Einheiten
5. Zusammensetzung der transparenten Oberfolie oder Oberschicht
   - 10 Gew.-Teile: Propylen-Homopolymerisat mit einem Anteil von
   - 4 - 9: vorzugsweise
   - 5 - 8 Gew.-Teilen: eines ataktischen Polypropylens sowie zusätzlich
   - 0,8 Gew.-Teile: eines Verarbeitungshilfsmittelgemisches

### Zeichnungsbeschreibung

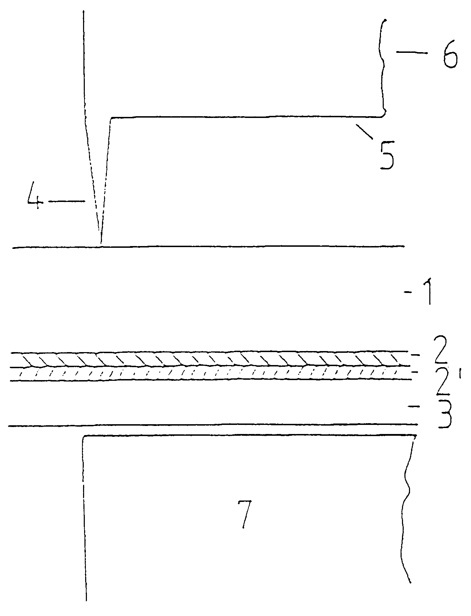

In der beigefügten Figur ist ein Ausführungsbeispiel des erfindungsgemäßen trennahtverschweißten Kunststoffbeutels und der Vorrichtung schematisch dargestellt. Zwischen dem Oberwerkzeug (6) und dem Unterwerkzeug (7) ist ein Schnitt durch die trennahtverschweißten Kunststoffbeutel, -taschen oder -hüllen schematisch wiedergegeben. Die obere Schicht (1) besteht aus der Opakfolie oder opaken Schicht, an die die Siegelschicht (2) angrenzt. Über die Trennahtschweißstelle ist die untere Folie, die aus der Siegelschicht (2' ) und der Transparentfolie (3) besteht, verbunden.

Bei dem Oberwerkzeug ist die Schneidkante (4) schematisch dargestellt, wobei die Schneidkante in ihrer Spitze nicht die Einzelheiten der Erfindung wiedergibt, da die Schneidkante in der Spitze eine gewisse Abrundung aufweist. Das Oberwerkzeug (6) weist nach der vorspringenden Schneidkante eine Schweißfläche (5) auf.

## Patentansprüche

1. Verfahren zum Verschweißen von flächig aufeinanderliegenden Kunststoffolien (einschließlich Kunststoffolienbahnen und/oder -zuschnitten), wobei die flächig aufeinanderliegenden Kunststoffolien mit einer beheizten Kontaktfläche oder Kontaktlinie und/oder Schneidkante in Berührung gebracht oder dagegen gedrückt werden, wobei als flächig aufeinanderliegende Kunstoffolien solche eingesetzt werden, die Olefinhomo-, -co-, -terpolymerisate und/oder Polyolefinlegierungen vorzugsweise zu mehr als 50 Gew.-% enthalten und eine Shore-D-Härte von 25 - 68, vorzugsweise 33 - 63, aufweisen und die flächig aufeinanderliegenden Kunstoffolien trennahtverschweißt werden, dadurch gekennzeichnet, daß zum Verschweißen zwei- oder mehrschichtige Verbundfolien unterschiedlich schemischer Zusammensetzung verwendet werden, von denen die eine Verbundfolie eine opake gefärbte oder ungefärbte Schicht oder Folie aufweist, die 50 - 80 Gewichtsteile Polypropylen, 5 - 15 Gewichtsteile EPDM und/oder EPM, 0,5 - 10 Gewichtsteile Füllstoff oder Füllstoffgemisch, 11 - 15 Gewichtsteile Ethylen-Vinylacetat-Copolymerisat, 10 - 30 Gewichtsteile Polyethylen oder Ethylen-Copolymerisat und 0 - 3,5 Gewichtsteile, vorzugsweise 0,1 - 1,5, Gewichtsteile, eines Verarbeitungshilfs- oder Zusatzmittels sowie 0 - 8 Gewichtsteile mindestens eines Farbtoffes und/oder Farbpigmentes enthält oder daraus besteht, daß auf dieser opaken Schicht oder Folie unmittelbar oder über eine Zwischenschicht eine transparente Siegelschicht auf der Basis eines Propylen-Ethylen-Copolymerisates oder einer Propylen-Ethylen-Legierung angeordnet ist, daß mit dieser Verbundfolie eine andere, aus mindestens zwei Schichten bestehende transparente Verbundfolie so verschweißt wird, daß die Siegelschicht der opaken Verbundfolie unmittelbar auf einer Siegelschicht der transparenten Verbundfolie aufliegt, daß die Siegelschicht der transparenten Verbundfolie ein Propylen-Ethylen-Copolymerisat oder eine Propylen-Ethylen-Legierung enthält oder daraus besteht und unmittelbar oder unter Zwischenschaltung einer transparenten Zwischenschicht oder Zwischenfolie mit einer transparenten Oberschicht auf der Basis von Polypropylen verbunden ist.

2. Verfahren nach Anspruch 1, dadurch gekennzeichnet, daß die opake, gefärbte oder ungefärbte Schicht oder Folie 55 - 70 Gewichtsteile Polypropylen, 5,5 - 10 Gewichtsteile EPDM , 1 - 5 Gewichtsteile Füllstoff, 3 - 10 Gewichtsteile Ethylen-Vinylacetat-Copolymerisat, 15 - 25 Gewichtsteile Polyethylen und 0,1 - 1,5 Gewichtsteile eines Verarbeitungshilfsmittels sowie 0,1 - 5 Gewichtsteile mindestens eines Farbstoffes und/oder Farbpigmentes enthält oder daraus besteht.

3. Verfahren nach Ansprüchen 1 und 2 , dadurch gekennzeichnet, daß die transparente Oberschicht oder Oberfächenschicht auf der Basis von Polypropylen je 100 Gewichtsteile Propylenhomopolymerisat 0 - 2,5 Gewichtsteile, vorzugsweise 0,1 - 1,5 Gewichtsteile eines Verarbeitungshilfsmittels enthält oder daraus besteht.

4. Verfahren nach einem oder mehreren der Ansprüche 1 - 3 , dadurch gekennzeichnet, daß die Siegelschichten je 100 Gewichtsteile Propylen-Ethylen-Copolymerisat 1 - 15 Gewichtsteile, vorzugsweise 3 - 10 Gewichtsteile Polyethylen-Einheiten oder Ethylen-Einheiten enthalten.

5. Verfahren nach einem oder mehreren der Ansprüche 1 - 4, dadurch gekennzeichnet, daß die opake Verbundfolie eine zweischichtige Verbundfolie ist, die aus einer 50 bis 400 µm, vorzugsweise 100 - 300 µm, dicken opaken Schicht oder Folie und einer 20 - 60 µm, vorzugsweise 25 - 50 µm, dicken Siegelschicht besteht.

6. Verfahren nach Ansprüchen 1 - 5, dadurch gekennzeichnet, daß die transparente Verbundfolie eine zweischichtige Verbundfolie ist, die aus einer 20 -60 µm, vorzugsweise 25 - 50 µm, dicken Siegelschicht und einer 50 - 250 µm, vorzugsweise 80 - 160 µm, dicken transparenten Oberflächenschicht besteht.

7. Verfahren nach einem oder mehreren der Ansprüche 1 - 6, dadurch gekennzeichnet, daß die Schweißtemperatur in Abhängigkeit von der Foliendicke, Schweißzeit, Druck, der Folienzusammensetzung und eventuellen Vorrichtungsteilen, insbesondere Temperaturtrennbänder, Transportbänder, Arbeitsplatten oder Vorschubvorrichtung im Temperaturbereich
100 - 190 °C, vorzugsweise
140 - 170 °C,
(berechnet als mittlere Schweißtemperatur) eingestellt wird.

8. Verfahren nach einem oder mehreren der Ansprüche 1 - 7, dadurch gekennzeichnet, daß der mittlere Temperaturbereich der Schweißtemperatur bei dem Oberwerkzeug
100 - 150 °C, vorzugsweise
120 - 145 °C,
bei dem Unterwerkzeug
140 - 190 °C, vorzugsweise
150 - 175 °C,
beträgt.

9. Verfahren nach einem oder mehreren der Ansprüche 1 - 8, dadurch gekennzeichnet, daß die Verschweißung mit einer beheizten Kontaktfläche ausgestatten Vorrichtung zum Verschweißen von Kunststoffolien, (Kunststoffbahnen und/oder -zuschnitten) sowie gegebenenfalls mit der Verschweißvorrichtung in Verbindung oder Kombination stehenden Hilfs- und/oder Zusatzvorrichtungen durchgeführt wird, wobei die Verschweißvorrichtung eine Schweißpresse ist, die aus mindestens einer Kunststoffschweißelektrode und aus mindestens einer Gegendruckplatte, -leiste oder -schiene, vorzugsweise einer Gegendruckelektrode, besteht, daß die Schweißelektrode und/oder die Gegendruckelektrode eine spitze oder messerähnliche Schneidkante aufweist, daß die Schweißelektrode und/oder die Gegendruckplatte, -leiste oder -schiene, vorzugsweise die Gegenelektrode, mittelbar oder unmittelbar beweglich angeordnet oder gelagert ist bzw. sind und die spitze oder messerähnliche Schneidkante mit einem in einem spitzen Winkel angeordneten oder abgeschrägten Schweißprofil, vorzugsweise gegenüber der Schneidkante zurückspringend angeordneten und/oder mit mindestens einer Stufe oder Ausnehmung versehenen zurückspringend angeordneten Schweißprofil kombiniert oder versehen ist, wobei die Kunststoffschweißelektrode und/oder die spitze oder messerähnliche Schneidkante vorzugsweise vertikal oder nahezu vertikal an der Schweißpresse und/oder zu der Gegendruckplatte und/oder zu den Kunststofffolien, -bahnen und/oder den -zuschnitten angeordnet ist, wobei zum Zeitpunkt der Trennahtverschweißung zwischen der Schweißpresse ein Band oder Transportband aus nicht oder schlecht wärmeleitendem Material , vorzugsweise ein feststehendes Trennband, Trenngitter, Trenngewebe oder Trenngewirke, vorzugsweise aus nicht wärmeleitendem Material, angeordnet ist oder der Transport der Kunststoffolien, -bahnen und/oder -zuschnitte mit oder ohne Band oder Transportband mit einem Zangenvorschub erfolgt, die Gegenelektrode oder das Gegenwerkzeug Profilierungen, vorzugsweise Nuten, Rillen und/oder vorspringende Kanten oder Erhebungen, und die Elektrode die Schneidkante und/oder das Schweißprofil aufweisen.

10. Trennahtverschweißte Kunststoffbeutel, -taschen oder -hüllen, die aus mindestens zwei miteinander trennahtverschweißten Kunststoffolienabschnitten oder -zuschnitten auf der Basis von Olefinhomo-, -co-, -terpolymerisaten und/oder Polyolefinlegierungen bestehen, die vorzugsweise zu mehr als 50 Gew.-% Polyolefin enthalten und eine Shore-D-Härte von 25 - 68, vorzugsweise 33 - 63, aufweisen und die Kunststoffolienbahnabschnitte oder -zuschnitte an oder in der Nähe ihrer Ränder miteinander trennahtverschweißt sind, dadurch gekennzeichnet, daß die zwei- oder mehrschichtigen Kunststoffbeutel, -taschen oder -hüllen unterschiedliche chemische Zusammensetzungen aufweisen, von denen der eine Verbundfolienbahnabschnitt oder -zuschnitt eine opake gefärbte oder ungefärbte Schicht oder Folie aufweist, die 50 - 80 Gewichtsteile Polypropylen, 5 - 15 Gewichtsteile EPDM und/oder EPM, 0,5 - 10 Gew.Teile Füllstoff oder Füllstoffgemisch, 11 - 15 Gewichtsteile Ethylen-Vinylacetat-Copolymerisat, 10 10 - 30 Gewichtsteile Polyethylen oder Ethylen-Copolymerisat und 0 - 3,5 Gewichtsteile, vorzugsweise 0,1 - 1,5 Gewichtsteile, eines Verarbeitungshilfs- oder -zusatzmittels sowie 0 - 8 Gewichtsteile mindestens eines Farbstoffes oder Farbpigmentes enthält oder daraus besteht, daß auf diesem opaken Verbundfolienabschnitt oder -zuschnitt unmittelbar oder über eine Zwischenschicht eine transparente Siegelschicht auf der Basis eines Propylen-Ethylen-Copolymerisates oder einer Propylen-Ethylen-Legierung angeordnet ist, daß mit diesem Verbundfolienbahnabschnitt oder -zuschnitt ein anderer, aus mindestens zwei Schichten bestehender transparenter Verbundfolienbahnabschnitt oder -zuschnitt über eine Trennnahtverschweißung oder eine Schweißnaht so verbunden ist, daß die Siegelschicht des opaken Verbundfolienbahnabschnittes oder -zuschnittes unmittelbar auf einer Siegelschicht des transparenten Verbundfolienbahnabschnittes oder -zuschnittes aufliegt, daß die Siegelschicht des transparenten Verbundfolienbahnabschnittes oder -zuschnittes ein Propylen-Ethylen-Copolymerisat oder eine Propylen-Ethylen-Legierung enthält oder daraus besteht und unmittelbar oder unter Zwischenschaltung einer transparenten Zwischenschicht oder Zwischenfolie mit einer transparenten Oberschicht auf der Basis von Polypropylen verbunden ist.

11. Trennahtverschweißte Kunststoffbeutel, -taschen oder -hüllen nach Anspruch 10, dadurch gekennzeichnet, daß die opake, gefärbte oder ungefärbte Schicht oder Folie des einen Verbundfolienabschnittes oder -zuschnittes 55 - 70 Gewichtsteile Polypropylen, 5,5 - 10 Gewichtsteile EPDM, 1 - 5 Gewichtsteile Füllstoff, 3 - 10 Gewichtsteile Ethylen-Vinylacetat-Copolymerisat, 15 - 25 Gewichtsteile Polyethylen und 0,1 bis 1,5 Gewichtsteile eines Verarbeitungshilfsmittels von 0,1 - 5 Gewichtsteile eines Farbstoffes und/oder Farbpigmentes enthält oder daraus besteht.

12. Trennnahtverschweißte Kunststoffbeutel, -taschen oder -hüllen nach Ansprüchen 10 und 11, dadurch gekennzeichnet, daß die transparente Oberschicht oder Oberflächenschicht des anderen Verbundfolienbahnabschnittes oder -zuschnittes auf der Basis von Polypropylen je 100 Gewichtsteile Propylenhomopolymerisat 0 - 2,5 Gewichtsteile, vorzugsweise 0,1 - 1,5 Gewichtsteile, eines Verarbeitungshilfsmittels enthält oder daraus besteht.

13. Trennnahtverschweißte Kunststoffbeutel, -taschen oder -hüllen nach einem oder mehreren der Ansprüche 10 bis 12, dadurch gekennzeichnet, daß die Siegelschichten je 100 Gewichtsteile Propylen-Ethylen-Copolymerisat 1 - 15 Gewichtsteile, vorzugsweise 3 - 10 Gewichtsteile Polyethylen-Einheiten oder Ethylen-Einheiten enthalten.

14. Trennnahtverschweißte Kunststoffbeutel, -taschen oder -hüllen nach einem oder mehreren der Ansprüche 10 bis 13, dadurch gekennzeichnet, daß der opake Verbundfolienbahnabschnitt oder -zuschnitt zweischichtig ist und aus einer 50 - 400 µm, vorzugsweise 100 - 300 µm, dicken opaken Schicht oder einem Folienbahnabschnitt und einer 20 - 60 µm, vorzugsweise 25 - 50 µm, dicken Siegelschicht besteht.

15. Trennnahtverschweißte Kunststoffbeutel, -taschen oder -hüllen nach einem oder mehreren der Ansprüche 10 bis 14, dadurch gekennzeichnet, daß der transparente Verbundfolienbahnabschnitt oder -zuschnitt zweischichtig ist und aus einer 20 - 60 µm, vorzugsweise 25 - 50 µm, dicken Siegelschicht und einer 50 - 250 µm, vorzugsweise 80 - 160 µm, dicken transparenten Oberflächenschicht besteht.

## Claims

1. A method for welding areally contacting plastics films (including plastics film webs and/or blanks), wherein the areally contacting plastics films are brought into contact with or pressed against a heated contact surface or contact line and/or cutting edge, with those areally contacting plastics films being used which contain preferably more than 50% by weight olefin homopolymers, copolymers, terpolymers and/or polyolefin alloys and have a Shore D hardness of 25 - 68, preferably 33 - 63, and the areally contacting plastics films are hot wire welded, characterised in that two-layer or multi-layer composite films of differing chemical composition are used for welding, of which one composite film has an opaque, coloured or non-coloured layer or film which contains or consists of 50 - 80 parts by weight polypropylene, 5 - 15 parts by weight EPDM and/or EPM, 0.5 - 10 parts by weight filler or filler mixture, 11 - 15 parts by weight ethylene-vinyl acetate copolymer, 10 - 30 parts by weight polyethylene or ethylene copolymer and 0 - 3.5 parts by weight, preferably 0.1 - 1.5 parts by weight, of a processing aid or additive, and also 0 - 8 parts by weight of at least one dye and/or coloured pigment, that a transparent heat-sealable coating on the basis of a propylene-ethylene copolymer or a propylene-ethylene alloy is arranged on this opaque layer or film directly or via an intermediate layer, that another transparent composite film consisting of at least two layers is welded to this composite film such that the heat-sealable coating of the opaque composite film lies directly on a heat-sealable coating of the transparent composite film, that the heat-sealable coating of the transparent composite film contains or consists of a propylene-ethylene copolymer or a propylene-ethylene alloy and is connected directly or with the interposition of a transparent intermediate layer or intermediate film to a transparent upper layer on the basis of polypropylene.

2. A method according to Claim 1, characterised in that the opaque, coloured or non-coloured layer or film contains or consists of 55 - 70 parts by weight polypropylene, 5.5 - 10 parts by weight EPDM, 1 - 5 parts by weight filler, 3 - 10 parts by weight ethylene-vinyl acetate copolymer, 15 - 25 parts by weight polyethylene and 0.1 - 1.5 parts by weight of a processing aid and 0.1 - 5 parts by weight of at least one dye and/or coloured pigment.

3. A method according to Claims 1 and 2, characterised in that the transparent upper layer or surface layer on the basis of polypropylene contains or consists of 0 - 2.5 parts by weight, preferably 0.1 to 1.5 parts by weight, of a processing aid per 100 parts by weight propylene homopolymer.

4. A method according to one or more of Claims 1 to 3, characterised in that the heat-sealable coatings contain 1 - 15 parts by weight, preferably 3 - 10 parts by weight, polyethylene units or ethylene units per 100 parts by weight propylene-ethylene copolymer.

5. A method according to one or more of Claims 1 to 4, characterised in that the opaque composite film is a two-layer composite film which consists of an opaque layer or film 50 to 400 µm, preferably 100 - 300 µm, thick and a heat-sealable coating 20 - 60 µm, preferably 25 - 50 µm, thick.

6. A method according to Claims 1 to 5, characterised in that the transparent composite film is a two-layer composite film which consists of a heat-sealable coating 20 - 60 µm, preferably 25 - 50 µm, thick and a transparent surface layer 50 - 250 µm, preferably 80 - 160 µm, thick.

7. A method according to one or more of Claims 1 to 6, characterised in that the welding temperature is set within the temperature range
100 - 190°C, preferably
140 - 170°C,
(calculated as average welding temperature) dependent on the film thickness, welding time, pressure, film composition and possible parts of the apparatus, in particular temperature separating belts, conveyor belts, work plates or feed device.

8. A method according to one or more of Claims 1 to 7, characterised in that the average temperature range of the welding temperature for the upper tool is
100 - 150°C, preferably
120 - 145°C,
and for the lower tool is
140 - 190°C, preferably
150 - 175°C.

9. A method according to one or more of Claims 1 to 8, characterised in that the welding is effected [with a] device for welding plastics films (plastics webs and/or blanks) equipped with a heated contact surface, and also optionally auxiliary and or additional devices in connection or combination with the welding device, with the welding device being a welding press which consists of at least one plastics welding electrode and of at least one counter pressure plate, pad or rail, preferably a counter pressure electrode, that the welding electrode and/or the counter pressure electrode has a pointed or blade-like cutting edge, that the welding electrode and/or the counter pressure plate, pad or rail, preferably the counter electrode, is or are arranged or mounted so as to be indirectly or directly movable, and the pointed or blade-like cutting edge is combined or provided with a welding profile which is arranged at an acute angle or is chamfered, preferably a welding profile which is arranged to be recessed, or arranged to be recessed provided with at least one step or recess, relative to the cutting edge, with the plastics welding electrode and/or the pointed or knife-like cutting edge preferably being arranged vertically or virtually vertically on the welding press and/or to the counter pressure plate and/or to the plastics films, webs and/or blanks, wherein at the moment of the hot wire welding a belt or conveyor belt made of non-heat-conductive or poorly heat-conductive material, preferably a fixed separating belt, separating grid, woven separating fabric or knitted separating fabric, preferably made of non-heat-conductive material, is arranged between the welding press, or the transport of the plastics films, webs and/or blanks is effected with or without belt or conveyor belt with a gripper feed, the counter-electrode or the counter-tool has profiled sections, preferably grooves, channels and/or projecting edges or elevations, and the electrode has the cutting edge and/or the welding profile.

10. Hot wire welded plastic bags, pouches or wrappers, which consist of at least two plastics film sections or blanks, hot wire welded together, on the basis of olefin homopolymers, copolymers, terpolymers and/or polyolefin alloys which contain preferably more than 50% by weight polyolefin and have a Shore D hardness of 25 - 68, preferably 33 - 63, and the plastics film web sections or blanks are hot wire welded together at or in the vicinity of their edges, characterised in that the two-layer or multi-layer plastic bags, pouches or wrappers have differing chemical compositions, of which one composite film web section or blank has an opaque, coloured or non-coloured layer or film which contains or consists of 50 - 80 parts by weight polypropylene, 5 - 15 parts by weight EPDM and/or EPM, 0.5 - 10 parts by weight filler or filler mixture, 11 - 15 parts by weight ethylene-vinyl acetate copolymer, 10 - 30 parts by weight polyethylene or ethylene copolymer and 0 - 3.5 parts by weight, preferably 0.1 - 1.5 parts by weight, of a processing aid or additive, and also 0 - 8 parts by weight of at least one dye or coloured pigment, that a transparent heat-sealable coating on the basis of a propylene-ethylene copolymer or a propylene-ethylene alloy is arranged on this opaque composite film section or blank directly or via an intermediate layer, that another transparent composite film web section consisting of at least two layers is joined to this composite film web section or blank by hot wire welding or a weld seam such that the heat-sealable coating of the opaque composite film web section or blank lies directly on a heat-sealable coating of the transparent composite film web section or blank, that the heat-sealable coating of the transparent composite film web section or blank contains or consists of a propylene-ethylene copolymer or a propylene-ethylene alloy and is connected directly or with the interposition of a transparent intermediate layer or intermediate film to a transparent upper layer on the basis of polypropylene.

11. Hot wire welded plastic bags, pouches or wrappers according to Claim 10, characterised in that the opaque, coloured or non-coloured layer or film of one composite film section or blank contains or consists of 55 - 70 parts by weight polypropylene, 5.5 - 10 parts by weight EPDM, 1 - 5 parts by weight filler, 3 - 10 parts by weight ethylene-vinyl acetate copolymer, 15 - 25 parts by weight polyethylene and 0.1 - 1.5 parts by weight of a processing aid and 0.1 - 5 parts by weight of a dye and/or coloured pigment.

12. Hot wire welded plastic bags, pouches or wrappers according to Claims 10 and 11, characterised in that the transparent upper layer or surface layer of the other composite film web section or blank on the basis of polypropylene contains or consists of 0 - 2.5 parts by weight, preferably 0.1 to 1.5 parts by weight, of a processing aid per 100 parts by weight propylene homopolymer.

13. Hot wire welded plastic bags, pouches or wrappers according to one or more of Claims 10 to 12, characterised in that the heat-sealable coatings contain 1 - 15 parts by weight, preferably 3 - 10 parts by weight, polyethylene units or ethylene units per 100 parts by weight propylene-ethylene copolymer.

14. Hot wire welded plastic bags, pouches or wrappers according to one or more of Claims 10 to 13, characterised in that the opaque composite film web section or blank is a two-layer one and consists of an opaque layer or a film web section 50 - 400 µm, preferably 100 - 300 µm, thick and a heat-sealable coating 20 - 60 µm, preferably 25 - 50 µm, thick.

15. Hot wire welded plastic bags, pouches or wrappers according to one or more of Claims 10 to 14, characterised in that the transparent composite film web section or blank is a two-layer one and consists of a heat-sealable coating 20 - 60 µm, preferably 25 - 50 µm, thick and a transparent surface layer 50 - 250 µm, preferably 80 - 160 µm, thick.

## Revendications

1. Procédé pour souder des feuilles planes en matière plastique l'une sur l'autre (y compris des bandes et/ou des découpes de feuilles en matière plastique), au cours duquel les feuilles en matière plastique disposées l'une sur l'autre sont mises en contact avec ou pressées contre une surface ou une ligne de contact et/ou une arête tranchante chauffée, en utilisant comme feuilles en matière plastique disposées l'une sur l'autre des feuilles qui contiennent des homopolymères, copolymères, terpolymères oléfiniques et/ou des alliages polyoléfiniques, de préférence à raison de plus de 50 % en poids, et qui présentent une dureté Shore-D de 25 à 68, de préférence de 33 à 63, et les feuilles en matière plastique disposées l'une sur l'autre sont soudées par joints de découpe, caractérisé en ce qu'on utilise pour le soudage des feuilles composites à deux ou plusieurs couches, de composition chimique différente, dont une des feuilles composites présente une couche ou feuille opaque, colorée ou non-colorée, qui contient ou est constituée de 50 à 80 parts en poids de polypropylène, de 5 à 15 parts en poids d'EPDM et/ou d'EPM, de 0,5 à 10 parts en poids de matière de charge ou d'un mélange de matières de charge, de 11 à 15 parts en poids de copolymère d'éthylène et d'acétate de vinyle, de 10 à 30 parts en poids de polyéthylène ou de copolymère de l'éthylène et de 0 à 3,5 parts en poids, de préférence de 0,1 à 1,5 parts en poids d'un adjuvant ou additif de mise en oeuvre, de même que de 0 à 8 parts en poids d'au moins un colorant et/ou pigment coloré, en ce qu'une couche soudable transparente à base d'un copolymère de propylène et d'éthylène ou d'un alliage de propylène et d'éthylène est disposée sur cette couche ou feuille opaque, directement ou par le biais d'une couche intermédiaire, en ce qu'une autre feuille composite transparente, constituée d'au moins deux couches, est soudée avec cette feuille composite de telle manière que la couche soudable de la feuille composite opaque est posée directement sur une couche soudable de la feuille composite transparente, que la couche soudable de la feuille composite transparente contient ou est constituée d'un copolymère de propylène et d'éthylène ou d'un alliage de propylène et d'éthylène et est reliée directement ou par le biais d'une couche ou feuille intermédiaire transparente à une couche supérieure transparente à base de polypropylène.

2. Procédé selon la revendication 1, caractérisé en ce que la couche ou feuille opaque, colorée ou non-colorée, contient ou est constituée de 55 à 70 parts en poids de polypropylène, de 5,5 à 10 parts en poids d'EPDM, de 1 à 5 parts en poids de matière de charge, de 3 à 10 parts en poids de copolymère d'éthylène et d'acétate de vinyle, de 15 à 25 parts en poids de polyéthylène et de 0,1 à 1,5 parts en poids d'un adjuvant de mise en oeuvre, de même que de 0,1 à 5 parts en poids d'au moins un colorant et/ou pigment coloré.

3. Procédé selon les revendications 1 et 2, caractérisé en ce que la couche supérieure ou couche superficielle transparente à base de polypropylène contient ou est constituée, par 100 parts en poids d'homopolymère de propylène, de 0 à 2,5 parts en poids, de préférence de 0,1 à 1,5 parts en poids, d'un adjuvant de mise en oeuvre.

4. Procédé selon une ou plusieurs des revendications 1 à 3, caractérisé en ce que les couches soudables contiennent par 100 parts en poids de copolymère de propylène et d'éthylène, 1 à 15 parts en poids, de préférence 3 à 10 parts en poids, d'unités de polyéthylène ou d'unités d'éthylène.

5. Procédé selon une ou plusieurs des revendications 1 à 4, caractérisé en ce que la feuille composite opaque est une feuille composite à deux couches, qui est constituée d'une couche ou feuille opaque d'une épaisseur de 50 à 400 µm, de préférence de 100 à 300 µm, et d'une couche soudable d'une épaisseur de 20 à 60 µm, de préférence de 25 à 50 µm.

6. Procédé selon les revendications 1 à 5, caractérisé en ce que la feuille composite transparente est une feuille composite à deux couches, qui est constituée d'une couche soudable d'une épaisseur de 20 à 60 µm, de préférence de 25 à 50 µm, et d'une couche superficielle transparente d'une épaisseur de 50 à 250 µm, de préférence de 80 à 160 µm.

7. Procédé selon une ou plusieurs des revendications 1 à 6, caractérisé en ce que la température de soudage est réglée en fonction de l'épaisseur de la feuille, de la durée du soudage, de la pression, de la composition de la feuille et d'éventuelles pièces du dispositif, en particulier de rubans de séparation thermique, des bandes transporteuses, des plans de travail ou de dispositif d'alimentation, dans la gamme de températures de 100 à 190 °C, de préférence de 140 à 170 °C, (calculée en tant que température de soudage moyenne).

8. Procédé selon une ou plusieurs des revendications 1 à 7, caractérisé en ce que la gamme de températures moyennes de la température de soudage vaut de 100 à 150 °C, de préférence de 120 à 145 °C, pour l'outil supérieur et de 140 à 190 °C, de préférence de 150 à 175 °C,
pour l'outil inférieur.

9. Procédé selon une ou plusieurs des revendications 1 à 8, caractérisé en ce que le soudage est effectué à l'aide d'un dispositif muni d'une surface de contact chauffée pour le soudage de feuilles en matière plastique (de bandes et/ou de découpes de feuilles en matière plastique), de même qu'éventuellement à l'aide de dispositifs auxiliaires et/ou supplémentaires en relation ou en combinaison avec le dispositif de soudage, le dispositif de soudage étant une presse à souder qui est constituée d'au moins une électrode de soudage pour matières plastiques et d'au moins une plaque, une barre ou un rail antagoniste, de préférence une électrode antagoniste, en ce que l'électrode de soudage et/ou l'électrode antagoniste présente une arête tranchante pointue ou présentant la forme d'un couteau, en ce que l'électrode de soudage et/ou la plaque, la barre ou le rail antagoniste, de préférence l'électrode antagoniste est, respectivement sont disposée(s) ou logée(s) de manière indirectement ou directement mobile(s) et que l'arête tranchante pointue ou présentant la forme d'un couteau, est combinée à ou munie d'un profil de soudage chanfreiné ou disposé en angle aigu, de préférence combinée à ou munie d'un profil de soudage disposé en retrait, face à l'arête tranchante et/ou d'un profil de soudage disposé en retrait, muni d'au moins un palier ou évidement, de manière à ce que l'électrode de soudage pour matières plastiques et/ou l'arête tranchante pointue ou présentant la forme d'un couteau est disposée de préférence verticalement ou presque verticalement à la presse à souder et/ou par rapport à la plaque antagoniste et/ou par rapport aux feuilles, bandes et/ou découpes de feuilles en matière plastique, de façon qu'au moment du soudage par joints de découpe, une bande ou une bande transporteuse en matière peu ou non thermoconductrice, de préférence un ruban de séparation, une grille de séparation, un tissu de séparation ou un tissu de séparation à mailles fixe, de préférence en matière non-thermoconductrice, est disposé(e) entre la presse à souder, ou le transport des feuilles, bandes et/ou découpes de feuilles en matière plastique s'effectue avec ou sans bande ou bande transporteuse grâce à une alimentation par pinces, la contre-électrode ou le contre-outil présentant un profil, de préférence des rainures, des cannelures et/ou des arêtes en saillie ou des élévations, et l'électrode présentant l'arête tranchante et/ou le profil de soudage.

10. Sachets, sacs ou enveloppes en matière plastique soudés par joints de découpe, qui sont constitués d'au moins deux sections ou découpes de feuilles en matière plastique, soudées ensemble par joints de découpe, à base d'homopolymères, de copolymères, de terpolymères oléfiniques et/ou d'alliages polyoléfiniques qui contiennent de préférence plus de 50 % en poids de polyoléfine et qui présentent une dureté Shore-D de 25 à 68, de préférence de 33 à 63, et les sections ou les découpes de bandes de feuilles en matière plastique sont soudées ensemble par joints de découpe à leurs bords ou au voisinage de ceux-ci, caractérisés en ce que les sachets, sacs ou enveloppes en matière plastique, à deux ou plusieurs couches, présentent des compositions chimiques différentes, dont l'une des sections ou découpes de bandes de feuille composite présente une couche ou feuille opaque, colorée ou non-colorée, qui contient ou est constituée de 50 à 80 parts en poids de polypropylène, de 5 à 15 parts en poids d'EPDM et/ou d'EPM, de 0,5 à 10 parts en poids de matière de charge ou d'un mélange de matières de charge, de 11 à 15 parts en poids de copolymère d'éthylène et d'acétate de vinyle, de 10 à 30 parts en poids de polyéthylène ou d'un copolymère de l'éthylène et de 0 à 3,5 parts en poids, de préférence de 0,1 à 1,5 parts en poids d'un adjuvant ou additif de mise en oeuvre, de même que de 0 à 8 parts en poids d'au moins un colorant et/ou pigment coloré, en ce qu'une couche soudable transparente à base d'un copolymère de propylène et d'éthylène ou d'un alliage de propylène et d'éthylène est disposée sur cette section ou découpe de feuille composite opaque, directement ou par le biais d'une couche intermédiaire, en ce qu'une autre section ou découpe de bandes de feuille composite transparente, constituée d'au moins deux couches, est liée par un soudage par joints de découpe ou par une soudure avec cette section ou découpe de bandes de feuille composite de telle manière que la couche soudable de la section ou découpe de bandes de feuille composite opaque est posée directement sur une couche soudable de la section ou découpe de bandes de feuille composite transparente, en ce que la couche soudable de la section ou découpe de bandes de feuille composite transparente contient ou est constituée d'un copolymère de propylène et d'éthylène ou d'un alliage de propylène et d'éthylène et est reliée directement ou par le biais d'une couche ou feuille intermédiaire transparente à une couche supérieure transparente à base de polypropylène.

11. Sachets, sacs ou enveloppes en matière plastique soudés par joints de découpe selon la revendication 10, caractérisés en ce que la couche ou feuille opaque, colorée ou non-colorée d'une des sections ou découpes de feuille composite, contient ou est constituée de 55 à 70 parts en poids de polypropylène, de 5,5 à 10 parts en poids d'EPDM, de 1 à 5 parts en poids de matière de charge, de 3 à 10 parts en poids de copolymère d'éthylène et d'acétate de vinyle, de 15 à 25 parts en poids de polyéthylène et de 0,1 à 1,5 parts en poids d'un adjuvant de mise en oeuvre, de 0,1 à 5 parts en poids d'un colorant et/ou pigment coloré.

12. Sachets, sacs ou enveloppes en matière plastique soudés par joints de découpe selon les revendications 10 et 11, caractérisés en ce que la couche supérieure ou la couche superficielle transparente de l'autre section ou découpe de feuille composite, à base de polypropylène, contient ou est constituée, par 100 parts en poids d'homopolymère de propylène, de 0 à 2,5 parts en poids, de préférence de 0,1 à 1,5 parts en poids, d'un adjuvant de mise en oeuvre.

13. Sachets, sacs ou enveloppes en matière plastique soudés par joints de découpe selon une ou plusieurs des revendications 10 à 12, caractérisés en ce que les couches soudables contiennent, par 100 parts en poids de copolymère de propylène et d'éthylène, 1 à 15 parts en poids, de préférence 3 à 10 parts en poids, d'unités de polyéthylène ou d'unités d'éthylène.

14. Sachets, sacs ou enveloppes en matière plastique soudés par joints de découpe selon une ou plusieurs des revendications 10 à 13, caractérisés en ce que la section ou découpe de bandes de feuille composite opaque présente deux couches et est constituée d'une couche ou section de bandes de feuille opaque d'une épaisseur de 50 à 400 µm, de préférence de 100 à 300 µm, et d'une couche soudable d'une épaisseur de 20 à 60 µm, de préférence de 25 à 50 µm.

15. Sachets, sacs ou enveloppes en matière plastique soudés par joints de découpe selon une ou plusieurs des revendications 10 à 14, caractérisés en ce que la section ou découpe de bandes de feuille composite transparente présente deux couches et est constituée d'une couche soudable d'une épaisseur de 20 à 60 µm, de préférence de 25 à 50 µm, et d'une couche superficielle transparente d'une épaisseur de 50 à 250 µm, de préférence de 80 à 160 µm.
